# EUROPÄISCHE PATENTSCHRIFT

(11) **EP 3 934 485 B1**
(45) Veröffentlichungstag und Bekanntmachung des Hinweises auf die Patenterteilung: **01.05.2024**
(21) Anmeldenummer: 20709176.0
(22) Anmeldetag: 04.03.2020
(51) Int. Cl.: A47C 27/08, A47C 23/00, B29D 99/00, B29C 35/00, A47G 9/10, A61G 5/10

(54) **VERFAHREN ZUM HERSTELLEN EINES KISSENS UND KISSEN**
METHOD FOR MANUFACTURING A CUSHION AND CUSHION
PROCÉDÉ DE FABRICATION D'UN COUSSIN ET COUSSIN

(30) Priorität: 04.03.2019 DE 102019105425
(43) Veröffentlichungstag der Anmeldung: 12.01.2022
(73) Patentinhaber: Otto Bock Mobility Solutions GmbH, 07426 Königsee-Rottenbach (DE)
(72) Erfinder: PERK, Heinrich, 13437 Berlin (DE); MCCARVILL, Sarah, 28359 Bremen (DE); HOTHAN, Arne, 10247 Berlin (DE); MÜLLER, Johann-Christoph, 10559 Berlin (DE); KLINGEBIEL, Frank, Stefan, 37115 Duderstadt (DE)
(74) Vertreter: Gramm, Lins & Partner Patent- und Rechtsanwälte PartGmbB
(86) Internationale Anmeldenummer: PCT/EP2020/055661
(87) Internationale Veröffentlichungsnummer: WO 2020/178318

(56) Entgegenhaltungen:
- DE-T2- 60 009 367
- US-A- 1 575 388
- US-A1- 2005 125 905
- US-A1- 2007 277 320
- US-A1- 2008 166 524

## Beschreibung

Die Erfindung betrifft ein Verfahren zum Herstellen eines Kissens für eine orthopädietechnische Einrichtung, wobei das Kissen wenigstens ein Fluid gefülltes Volumen aufweist und wobei das Verfahren folgende Schritte aufweist:
a) Formpressen eines 3-dimensionalen ersten Kissenteiles aus wenigstens einem ersten Material, das vorzugsweise elastisch ist, in einer Form, die eine Innenform und eine Außenform aufweist,
b) Verbinden des ersten Kissenteiles mit wenigstens einem zweiten Kissenteil derart, dass das fluidgefüllte Volumen entsteht,
wobei der Verfahrensschritt a) folgende Schritte aufweist:
a1) Einfüllen von Rohmaterial in die Form,
a2) Pressen des Rohmaterials zwischen Innenform und Außenform
a3) Vulkanisieren des Rohmaterials zwischen Innenform und Außenform, so dass das erste Kissenteil entsteht.

Unterschiedliche orthopädietechnische Einrichtungen verfügen über Kissen, um beispielsweise Körperteile, die in der orthopädietechnischen Einrichtung gelagert werden, zu schonen und polsternd zu lagern. Dies betrifft beispielsweise Sitzkissen, Rückenlehnen, Kopfstützen, Abduktionskeile und sonstige Kissen für beispielsweise Rollstühle, Matratzen und Kissen für orthopädische Betten und Krankenhausbetten sowie Kissen, wie sie beispielsweise in Orthesen angeordnet werden, um ein in der Orthese gelagertes Körperteil schützend zu lagern. Unter einem Kissen wird vorliegend vorzugsweise jedes fluidgefüllte Element verstanden, das für die Lagerung und/oder Positionierung wenigstens eines Körperteiles verwendet wird.

Eine Vielzahl dieser Kissen sind aus dem Stand der Technik, beispielsweise US 2008/166524 A1 oder US 2007/277320 A1, bekannt und verfügen über ein fluidgefülltes Volumen, beispielsweise ein Luftkissen. Fluide sind beispielsweise Gase, Gele, insbesondere viskoelastische Gele oder Flüssigkeiten. Das Volumen, das mit dem Fluid gefüllt ist, wird vorzugsweise durch Bauteile gebildet, die aus einem elastischen Material hergestellt sind und wird herkömmlicherweise in wenigstens zwei Kissenteilen hergestellt. Ein 3-dimensionales erstes Kissenteil, das beispielsweise in Form eines Bechers oder Doms ausgebildet ist, und eine an wenigstens einer Seite geöffneten Hohlraum aufweist, und ein zweites Kissenteil, das vorzugsweise ebenfalls aus einem elastischen Material besteht und mit dem ersten Kissenteilverbunden werden kann, wodurch das Volumen geschlossen wird.

Das 3-dimensionale erste Kissenteilkann dabei dem Verwendungszweck des Kissens angemessen geformt sein. Derartige erste Kissenteilewerden in der Regel in einem Tauch-Verfahren hergestellt, bei dem ein Formling, der die Innenkontur des herzustellenden 3-dimensionalen ersten Kissenteils bildet, in ein Bad mit flüssigem oder zumindest erweichtem Material getaucht wird. Nachdem der Formling wieder aus dem Material entfernt wird, bleibt eine Schicht des Materials am Formling haften und härtet aus. Je nach gewünschter Wandstärke wird dieser Verfahrensschritt mehrfach wiederholt.

Nachteilig ist jedoch, dass es mit diesem Verfahren nicht möglich ist, Kissen in optimaler Konfiguration herzustellen, wenn beispielsweise in unterschiedlichen Bereichen des Kissens unterschiedlich starke und insbesondere präzise definierte Wandstärken gefordert werden. Zudem wird durch das aus dem Stand der Technik bekannte Tauchverfahren ein relativ großer Anteil der hergestellten 3-dimensionalen ersten Kissenteilen mit Fehlern hergestellt, so dass die einmal ausgehärteten ersten Kissenteile nur als Ausschuss betrachtet und nicht zur Produktion der Kissen verwendet werden können.

Der Erfindung liegt daher die Aufgabe zugrunde, ein Verfahren zum Herstellen eines derartigen Kissens zu verbessern.

Die Erfindung löst die gestellte Aufgabe durch ein Verfahren gemäß dem Oberbegriff des Anspruchs 1, das sich dadurch auszeichnet, dass das erste Kissenteil und/oder das zweite Kissenteil über Bereiche unterschiedlicher Wandstärken und/oder über eine Oberfläche mit Bereichen unterschiedlicher Struktur und/oder Rauigkeit aufweist und dass das fluidgefüllte Volumen mehrere Kammern aufweist, die durch Fluidverbindungen miteinander verbunden sind.

Der Hauptunterschied des erfindungsgemäßen Verfahrens gegenüber dem aus dem Stand der Technik bekannten Verfahren zum Herstellen des fluidgefüllten Volumens für das Kissen besteht darin, dass das 3-dimensionale erste Kissenteil in einem Formpressverfahren hergestellt wird. Dazu wird eine Form verwendet, die eine Innenform und eine Außenform aufweist. Zwischen der Innenform und der Außenform wird das erste Kissenteilhergestellt, wobei das erste Material, aus dem das erste Kissenteilhergestellt wird, den gesamten Zwischenraum zwischen der Innenform und der Außenform ausfüllt. Auf diese Weise kann ein 3-dimensionales erstes Kissenteilhergestellt werden, das in Kontur, Materialstärke und Oberflächenbeschaffenheit definiert und an die jeweiligen Anforderungen angepasst hergestellt werden kann, indem eine passende Innenform und eine passende Außenform gewählt wird. Die Produktion von Ausschuss oder Kissenteilen, die nicht für die weitere Produktion verwendet werden können, ist damit stark reduziert. Weitere Vorteile sind die Möglichkeit, durch die Wahl und Form der Innenform und/oder der Außenform die Kontur und/oder Oberflächenstruktur und/oder Wandstärke präziser vorzugeben, als dies bei Verfahren aus dem Stand der Technik möglich ist, und die sehr gute Wiederholbarkeit. In einer bevorzugten Ausgestaltung wird auch das wenigstens eine zweite Kissenteildurch das beschriebene Formpress-Verfahren hergestellt. Besonders bevorzugt werden das erste Kissenteil und das wenigstens eine zweite Kissenteil in einer einzigen Form gleichzeitig hergestellt.

Das erste und/oder das zweite Material ist vorzugsweise ein Silikon, ein Polyurethan oder Polychloropren. Dabei ist es durchaus möglich, dass das jeweilige Material wenigstens einen weiteren Bearbeitungsschritt nötig macht, um beispielsweise die gewünschte Gasdichtigkeit zu erreichen, was insbesondere bei Silikon oftmals nötig ist.

Erfindungsgemäß verfügt der Verfahrensschritt a) des Formpressens über folgende Schritte:
a1) Einfüllen von Rohmaterial in die Form,
a2) Pressen des Rohmaterials zwischen Innenform und Außenform a3) Vulkanisieren des Rohmaterials zwischen Innenform und Außenform, so dass das erste Kissenteil entsteht.
Im ersten dieser Teilschritte wird Rohmaterial beispielsweise in Form eines Rohlings, in Form von Pellets, Granulat, einer kalandrierten Platte oder Pulver oder eines anderen Halbzeugs in die Form eingefüllt. Das Rohmaterial kann auch in Form einer oder mehrerer Flüssigkeiten vorliegen, die in die Form eingefüllt wird. Bei dem Rohmaterial kann, muss es sich jedoch nicht bereits um das erste Material handeln. Vorzugsweise wird das eingefüllte Rohmaterial innerhalb der Form erwärmt, so dass es schmilzt oder zumindest soweit erweicht, dass es formbar ist. Dies geschieht beispielsweise bei Temperaturen zwischen 140°C und 180°C. Der Schritt des Erwärmens ist unnötig, wenn Rohmaterial verwendet wird das bereits bei Raumtemperatur formbar ist.

Bevorzugt wird das Rohmaterial in die Außenform, die ein beispielsweise nach oben geöffneter Behälter ist, eingefüllt und darin erwärmt. Erst dann wird in dieser bevorzugten Ausgestaltung die Innenform in die Außenform eingeführt und so der gewünschte Zwischenraum, der von dem ersten elastischen Material ausgefüllt werden soll, gebildet. Dies geschieht im Verfahrensschritt a2), bei dem das Rohmaterial nach dem Erwärmen zwischen der Innenform und der Außenform gepresst wird. Abschließend wird in dieser Position der Innenform und der Außenform das Rohmaterial ausgehärtet oder vulkanisiert, so dass das erste elastische Material entsteht. Alternativ dazu kann die Form auch geöffnet werden, bevor das Rohmaterial vollständig ausgehärtet oder vulkanisiert ist. Dazu muss es natürlich bereits eine ausreichende Festigkeit aufweisen, damit die durch die Form definierte Gestaltung des herzustellenden Kissenteils nicht verloren geht. In diesem noch nicht vollständig ausgehärteten oder vollständig vulkanisierten Zustand können weitere Zusatzstoffe zugegeben werden, um weitere Effekte zu erreichen. So kann beispielsweise ein aufschäumender Zusatzstoff verwendet werden, um einen aufgeschäumten Teil des jeweiligen Bauteiles herzustellen.

Für bestimmte Materialien ist es notwendig oder zumindest vorteilhaft, zusätzliche Elemente, wie beispielsweise Reaktionspartner des Rohmaterials mit dem Rohmaterial zusammen in die Form zu geben. Beim Erwärmen kommt es dann beispielsweise zu einer chemischen Reaktion, die dafür sorgt, dass aus dem Rohmaterial das erste elastische Material entsteht.

Da anders als beim Verfahren aus dem Stand der Technik bei der hier beschriebenen bevorzugten Ausgestaltung des Verfahrens das erste Kissenteilvollständig innerhalb der Form entsteht und auch innerhalb der Form aushärtet oder vulkanisiert, kann auf diese Weise besonders einfach vermieden werden, dass während des Aushärtens oder Vulkanisierens störende Einflüsse die äußere Form, die Materialzusammensetzung oder sonstige Eigenschaften des herzustellenden ersten Kissenteils beeinflussen oder Beschädigungen auftreten können.

In einer bevorzugten Ausgestaltung des Verfahrens ist das durch Formpressen hergestellte erste Kissenteil und das zweite Kissenteil vollständig ausgehärtet und/oder vulkanisiert. Zum Verbinden der beiden Kissenteile wird Rohmaterial zwischen den beiden Kissenteilen angeordnet, das dann vorzugsweise unter erhöhter Temperatur und/oder erhöhtem Druck aushärtet oder vulkanisiert. Dabei verbindet es die beiden bereits zuvor ausgehärteten oder vulkanisierten Kissenteile miteinander. Das zum Verbinden genutzte Rohmaterial kann dabei das gleiche Rohmaterial sein, aus dem auch die Kissenteile hergestellt wurden, es kann aber auch ein anderes vulkanisierbares und/oder aushärtbares Rohmaterial genutzt werden.

Dadurch wird das Verfahren weiter vereinfacht. Vorzugsweise wird das durch Formpressen hergestellte erste Kissenteil nach dem Aushärten oder Vulkanisieren auch nach dem Öffnen der Form in der Form, vorzugsweise in der Außenform, belassen. Dadurch muss das Kissenteil nicht entnommen und in eine andere Vorrichtung überführt oder auf sonstige Weise bearbeitet oder gehandhabt werden. In diesem Zustand wird das zweite Kissenteil in der Position und Orientierung an dem ersten Kissenteil angeordnet, in der die beiden Kissenteile miteinander verbunden werden sollen. Das Rohmaterial wird bevorzugt an dem ersten Kissenteil angeordnet, beispielsweise auf die Verbindungsstellen, an denen das erste Kissenteil mit dem zweiten Kissenteil verbunden werden soll, aufgelegt. Ist das Rohmaterial in einem streichfähigen Zustand kann es auch auf das erste Kissenteil und/oder das zweite Kissenteil aufgebracht werden. Dazu wird das Rohmaterial vorzugsweise erwärmt bis es streichfähig, vorzugsweise flüssig, ist.

Nachdem die beiden Kissenteile mit dem dazwischen positionierten Rohmaterial aneinander angeordnet wurden, werden sie vorzugsweise einer erhöhten Temperatur ausgesetzt, also aufgewärmt. Besonders bevorzugt wird ein Druck auf die beiden Kissenteile ausgeübt. Dies kann beispielsweise geschehen, indem ein beheizter oder beheizbarer Stempel auf die beiden Kissenteile gedrückt, insbesondere auf sie abgesenkt wird. In diesem Zustand härtet das Rohmaterial aus oder vulkanisiert und verbindet so die beiden Kissenteile.

In einer bevorzugten Ausgestaltung sind das erste Kissenteil und das zweite Kissenteil einstückig miteinander ausgebildet, also Teile eines einzigen Bauteils. Dieses wird besonders bevorzugt beim Formpressen im Verfahrensschritt a) hergestellt. Die beiden Kissenteile können beispielsweise durch ein Filmscharnier, also einen Bereich mit verringerter Wandstärke im Vergleich zu der das Filmscharnier umgebenden Wandstärke, miteinander verbunden sein. Das erste Kissenteil und das zweite Kissenteil sind relativ zueinander bewegbar, beispielsweise verschwenkbar angeordnet und ausgebildet und werden zum Verbinden der beiden Kissenteile im Verfahrensschritt b) in die benötigte Position und/Orientierung gebracht. Das Bauteil, dessen Teile die beiden Kissenteile sind kann beispielsweise gebogen, geknickt oder gefaltet werden, um die Kissenteile in die Position und/oder Orientierung zueinander zu bringen, in der sie miteinander verbunden werden.

Alternativ dazu kann es von Vorteil sein, wenn das wenigstens eine zweite Kissenteil ein von dem ersten Kissenteil separates Bauteil ist. Dies ist insbesondere dann von Vorteil, wenn das zweite Kissenteil eine einfache geometrische Form und Kontur aufweist, beispielsweise in Form einer Platte ausgebildet ist.

Vorteilhafterweise werden das erste Kissenteil und/oder das zweite Kissenteilaus mehreren unterschiedlichen Materialien hergestellt, die sich vorzugsweise beim Herstellen des jeweiligen Kissenteils stoffschlüssig miteinander verbinden, bevorzugt gemeinsam vulkanisieren. Vorzugsweise ist wenigstens eines der Materialien ein elastisches Material, besonders bevorzugt sind alle Materialien elastische Materialien.

Um derartige Kissenteileherzustellen können beispielsweise mehrere Rohmaterialien, die beim Vulkanisieren oder Aushärten zu unterschiedlichen Materialien führen, gemeinsam in die Form zum Formpressen eingebracht werden. Geschieht dies nicht homogen verteilt, sondern beispielsweise räumlich getrennt, können auf diese Weise im ersten Kissenteil Abschnitte entstehen, deren erstes Material überwiegend oder vollständig ein erster Werkstoff ist, während andere Bereiche hergestellt werden können, deren erstes Material vollständig oder überwiegend ein zweiter Werkstoff ist. Selbstverständlich sind auch mehrere unterschiedliche Werkstoffe und Materialien kombinierbar. Da die Materialien während des Herstellens, insbesondere während des Formpressens stoffschlüssig miteinander verbunden werden, indem sie beispielsweise chemisch miteinander reagieren, vernetzen, aufschäumen oder vulkanisieren, entsteht ein einstückiges 3-dimensionales erstes Kissenteil, das genau vorherbestimmte mechanische, insbesondere elastische Eigenschaften aufweist, ohne dass mehrere Kissenteilekompliziert und damit zeit- und kostenaufwendig miteinander verbunden werden müssen. Werden das erste Kissenteil und das zweite Kissenteil beide durch ein Formpressverfahren, insbesondere einstückig hergestellt, kann auch das zweite Kissenteil die hier für das erste Kissenteil beschriebenen Vorteile aufweisen.

Das Kissen kann auch aus mehr als zwei Kissenteilen hergestellt werden, von denen einige oder alle durch eines der hier beschriebenen Formpressverfahren hergestellt werden. Es können mehrere oder alle diese Kissenteile durch das gleiche Formpressverfahren hergestellt werden oder es wird für jedes Kissenteil ein separates Formpressverfahren verwendet. Zusätzlich können natürlich weitere Kissenteile verwendet werden, die nicht durch ein Formpressverfahren hergestellt werden.

Erfindungsgemäß verfügt das fluidgefüllte Volumen über mehrere Kammern, die durch Fluidverbindungen miteinander verbunden sind. Alternativ oder zusätzlich dazu verfügt das Volumen über Kammern, die nicht mit anderen Kammern fluidtechnisch verbunden sind. Diese mehreren Kammern können sich bereits beispielsweise in Form von mehreren Ausformungen, Vertiefungen oder Aushöhlungen im ersten Kissenteilbilden, und werden in diesem Fall durch das zweite Kissenteil lediglich an der geöffneten Seite abgeschlossen. Selbstverständlich kann auch das zweite Kissenteileine 3-dimensionale Form aufweisen. Es kann, muss jedoch nicht plattenförmig ausgebildet sein. Insbesondere wenn auch das wenigstens eine zweite Kissenteildurch ein Formpress-Verfahren der hier beschriebenen Art hergestellt wird, ist die Kontur, Wandstärke, Materialzusammensetzung und/oder Oberflächenbeschaffenheit und/oder Oberflächenstruktur nahezu frei vorgebbar. Die Fluidverbindungen weisen vorteilhafterweise einen geringeren Querschnitt auf als die einzelnen Kammern. Auf diese Weise kann beispielsweise ein Kissen entstehen, das besondere elastische und damit polsternde und dämpfende Eigenschaften aufweist. Insbesondere für den Fall, dass das Volumen mehrere Kammern aufweist, die durch Fluidverbindungen miteinander verbunden sind, entsteht eine dämpfende Wirkung, da der durch den relativ zu dem Volumen der Kammer geringeren Querschnitt der Fluidverbindungen entstehende Strömungswiderstand einen Austausch des Fluids zwischen den Kammern behindert und erschwert. Dadurch wird eine erhöhte Stützwirkung des Kissens erreicht.

In einer bevorzugten Ausgestaltung verfügt das fluidgefüllte Volumen über mehrere Kammern, von denen nicht alle miteinander in fluidtechnischer Verbindung stehen. Stattdessen bilden die mehreren Kammern mehrere, beispielsweise zwei voneinander getrennte Teil-Volumina, die jeweils aus mehreren untereinander verbundenen Kammern bestehen. Die Teil-Volumina sind nicht miteinander fluidtechnisch verbunden.

Erfindungsgemäß verfügt das erste Kissenteil und/oder das wenigstens eine zweite Kissenteil über Bereiche unterschiedlicher Wandstärken und/oder über eine Oberfläche mit Bereichen unterschiedlicher Struktur und/oder Rauigkeit. Durch das verwendete Formpressverfahren der hier beschriebenen Art lassen sich diese Parameter präziser fertigen, um die Vorgaben zu erfüllen.

Handelt es sich bei dem Kissen beispielsweise um ein Sitzkissen für einen Rollstuhl, ist es von Vorteil, wenn die Wandstärke im mittleren Bereich des Kissens, auf dem wahrscheinlich bei der Verwendung der Benutzer des Rollstuhls sitzen wird, eine geringere Wandstärke aufweist, als im Randbereich. Beugt sich beispielsweise der Benutzer des Rollstuhls, der auf dem Kissen sitzt, zur Seite, um beispielsweise ein Glas von einem Tisch zu greifen, verlagert er sein Gewicht zur Seite. In diesem Fall ist es von Vorteil, wenn die Wandstärke des ersten elastischen Materials im seitlichen Bereich größer ist als im mittleren Bereich, um beispielsweise dem Benutzer des Rollstuhls auf diese Weise Halt zu geben und ihn zu stützen. Durch eine erhöhte Wandstärke kann zudem die Haltbarkeit des Kissens erhöht werden. Vorzugsweise ist daher die Wandstärke in stärker belasteten Bereichen erhöht. Da die Wandstärke lediglich vom Abstand zwischen der Innenform und der Außenform abhängt, kann sie durch geschickte Wahl von Innenform und Außenform frei gewählt und eingestellt werden. Das gleiche Prinzip gilt beispielsweise, wenn es sich bei dem Kissen um eine Matratze oder ein Kissen für ein orthopädisches Bett oder ein Krankenhausbett handelt. Auch in diesem Fall ist es von Vorteil, Bereiche mit größerer Wandstärke auszustatten, um einem Nutzer, der auf der Matratze oder in dem Bett liegt, Halt zu geben und ihn beispielsweise davor zu bewahren, aus dem Bett zu rollen. Eine erhöhte Wandstärke ist beispielsweise auch in den Bereichen einer Matratze sinnvoll, an denen die Matratze angefasst wird, um sie zu bewegen, beispielsweise zu drehen. Den dabei in sehr kleinen Bereichen auftretenden Zugkräften kann so einfach Rechnung getragen werden.

Eine äußere Oberfläche mit unterschiedlicher Rauigkeit kann ebenfalls von Vorteil sein. Das fluidgefüllte Volumen kann zudem von einem Bezug umgeben sein, um ein optisch ansprechendes Gesamtbild abzugeben und die Schnittstelle zum Benutzer zu gestalten. Dies betrifft beispielsweise die Reinigung, die Übertragung von Scherkräften und die Lastübertragung auf das Kissen und das fluidgefüllte Volumen. Auch andere Beschichtungen, beispielsweise eine Metallbeschichtung, die auf der Außenseite des fluidgefüllten Volumens angeordnet werden soll, kann leichter angeordnet und aufgedampft werden, wenn die Oberfläche in diesen Bereichen über eine bestimmte Rauigkeit verfügt. Die Rauigkeit an der Außenseite kann beeinflusst werden, indem die Innenkontur der Außenform entsprechend behandelt wird.

Vorteilhafterweise wird die Innenform und/oder die Außenform mit einer Beschichtung versehen, die beim Formpressen auf das erste Bauteil übertragen wird, wobei die Beschichtung vorzugsweise in die Form eingelegt und/oder auf die Innenform und/oder die Außenform aufgebracht ist. Die Beschichtung kann beispielsweise aufgesprüht oder aufgepinselt werden oder die jeweilige Form wird mit dem Material der Beschichtung eingeschmiert. Auf diese Weise lässt sich ein fluidgefülltes Volumen herstellen, dessen erstes Kissenteil bereits mit einer Beschichtung versehen ist. Eine nachträgliche Beschichtung des fertigen Kissenteils oder des fluidgefüllten Volumens wird dadurch überflüssig. Auf diese Weise kann der Herstellungsaufwand verringert und gleichzeitig die Herstellungskosten gesenkt werden. Insbesondere wenn auch das wenigstens eine zweite Kissenteildurch ein hier beschriebenes Formpressverfahren hergestellt wird, ist alternativ oder zusätzlich dazu auch das wenigstens eine zweite Kissenteilmit einer Beschichtung versehen.

In einer bevorzugten Ausgestaltung handelt es sich bei dem wenigstens einen ersten Material um ein aufschäumendes Material. Werden unterschiedliche Materialien als erstes elastisches Material verwendet, können sie alle aufschäumende Materialien sein, wobei auch unterschiedliche aufschäumende Materialien verwendet werden können. Selbstverständlich können auch aufschäumende Materialien mit nicht aufschäumenden Materialien kombiniert werden. Auf diese Weise lässt sich die mechanische Stabilität, die Elastizität, die Dichte und damit das Gewicht des fluidgefüllten Volumen an unterschiedlichen Stellen genau einstellen, so dass beispielsweise die gewünschten und für die gewählte Anwendung idealen mechanischen Eigenschaften hervorgerufen werden können.

In einer bevorzugten Ausgestaltung des Verfahrens werden beim Formpressen des ersten Kissenteiles wenigstens ein Sensor und/oder wenigstens ein Aktuator und/oder wenigstens ein Funktionselement in das erste Kissenteileingebracht und/oder an das erste Kissenteilangebracht. Ein Funktionselement ist dabei beispielsweise ein Ventil, ein elektrischer Leiter, ein Befestigungselement oder ein Formschlusselement. Werden die Gegenstände in das Kissenteileingebracht, werden sie beim Formpressen zwischen der Innenform und der Außenform angeordnet. Dies kann geschehen, nachdem das Rohmaterial in die Form eingefüllt wurde oder bereits davor. Wird der Sensor oder Aktuator an das erste Kissenteil lediglich angebracht, wird es beispielsweise in eine Vertiefung der Innenform und/oder der Außenform eingelegt, so dass beim Formpressen das erste Material, das das erste Kissenteilbildet, beim Aushärten oder Vulkanisieren mit dem entsprechenden Element, also dem Sensor und/oder dem Aktuator verbunden wird. Wird auch das wenigstens eine zweite Kissenteildurch ein hier beschriebenes Formpress-verfahren hergestellt, kann besonders einfach auch das wenigstens eine zweite Kissenteilmit wenigstens einem Sensor, wenigstens einem Aktuator und/oder wenigstens einem Funktionselement ausgestattet werden. Selbstverständlich können diese Gegenstände auch auf andere Weise in und/oder an dem ersten Kissenteil und/oder dem zweiten Kissenteilangeordnet werden.

Mögliche Sensoren sind beispielsweise Druck- oder Feuchtigkeitssensoren, die Messwerte über das Kissen beispielsweise im belasteten Zustand sammeln und an eine Auswerteeinrichtung übermitteln. Dazu können elektrische Leitungen zur Signalübermittlung ebenfalls in das jeweilige Kissenteileingebettet sein. Alternativ oder zusätzlich dazu ist auch eine drahtlose Kommunikation zwischen einem Sensor, der in das jeweilige Kissenteileingearbeitet wurde und einer elektronischen Auswerteeinrichtung möglich. Ein Aktuator kann beispielsweise eine Pumpe und/oder ein aktiv gesteuertes Ventil sein, was insbesondere dann von Vorteil ist, wenn das fluidgefüllte Volumen über mehrere Kammern verfügt, in die das Fluid hinein und aus denen das Fluid heraus gepumpt werden kann. Auf diese Weise können beispielsweise Matratzen oder Kissen hergestellt werden, bei denen ein darauf beispielsweise ruhender Nutzer umgelagert werden kann, ohne dass dazu Pflege- oder Hilfspersonal benötigt würde.

Vorzugsweise wird beim Formpressen ein Element, beispielsweise ein Gitter aus einem elektrisch leitfähigem Material in das wenigstens eine elastische Material eingebracht oder das wenigstens eine erste elastische Material elektrisch leitfähig gemacht. Alternativ oder zusätzlich dazu handelt es sich bei dem ersten elastischen Material bereits um ein elektrisch leitfähiges Material.

Die Erfindung löst die gestellte Aufgabe zudem durch ein Kissen für eine orthopädietechnische Einrichtung, das nach einem hier beschriebenen Verfahren hergestellt ist sowie durch eine orthopädietechnische Einrichtung mit wenigstens einem derartigen Kissen.

Mit Hilfe der beiliegenden Zeichnungen werden nachfolgend einige Ausführungsbeispiele der vorliegenden Erfindung näher erläutert. Es zeigt:
- Figur 1 -: die schematische, dreidimensionale Ansicht eines Kissens in einer Draufsicht und einer Schnittdarstellung,
- Figur 2 -: die schematische, dreidimensionale Ansicht eines weiteren Kissens,
- Figur 3 -: eine Schnittdarstellung durch Figur 2,
- Figur 4 -: die Schnittdarstellung durch ein weiteres Kissen mit einem vergrößerten Ausschnitt,
- Figuren 5 - 7 -: verschiedene Verfahrensstadien beim Formpressen,
- Figuren 8 - 10 -: verschiedene Stadien bei einstückigen Kissenteilen,
- Figuren 11 und 12 -: verschiedene Stadien bei aufschäumendem Material und
- Figuren 13 - 15 -: Schnittdarstellungen durch verschiedene Kissen gemäß unterschiedlicher Ausführunasbeisoiele der vorlieaenden Erfindung.

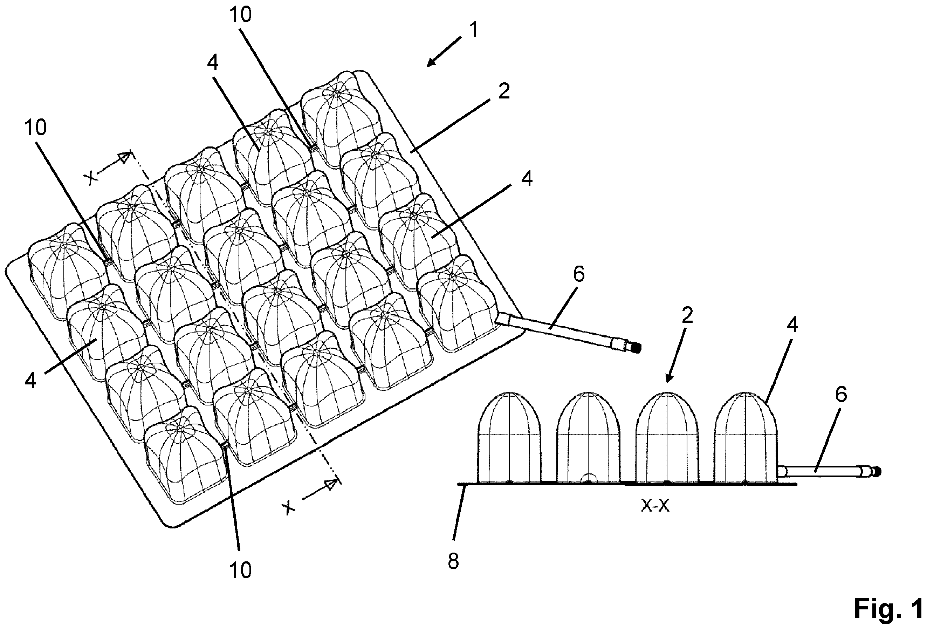

Figur 1 zeigt ein Kissen 1, das gemäß einem Verfahren gemäß einem Ausführungsbeispiel der vorliegenden Erfindung hergestellt ist. Im linken Teil ist eine dreidimensionale Ansicht und im rechten Teil der Figur 1 die Schnittdarstellung entlang der Linie X-X dargestellt.

Man erkennt ein erstes Kissenteil 2, das eine Mehrzahl von Wölbungen 4 aufweist, und über eine Zuleitung 6 verfügt. In der Schnittdarstellung im rechten Teil der Figur 1 ist zu erkennen, dass das erste Kissenteil 2 Wölbungen 4 aufweist, die in Figur 1 nach unten geöffnet sind und dort von einem zweiten Kissenteil 8 verschlossen werden. Das erste Kissenteil 2 ist mit dem zweiten Kissenteil 8 so verbunden, dass der Innenraum der Wölbungen 4 ein Volumen bildet, das mit einem Fluid, beispielsweise einem Gas oder einer Flüssigkeit, gefüllt ist. Die Zuleitung 6 ermöglicht es, die Menge des Fluides innerhalb des Volumens einzustellen, indem beispielsweise Fluid in das Volumen hineingepumpt oder aus ihm abgelassen wird.

In der dreidimensionalen Ansicht der Figur 1 ist zu erkennen, dass zwischen den einzelnen Wölbungen 4 Fluidverbindungen 10 vorhanden sind, durch die die einzelnen Wölbungen 4 und das darunter eingeschlossene Volumen miteinander in fluidtechnischer Verbindung stehen. Wird das in Figur 1 gezeigte Kissen beispielsweise als Sitzkissen für einen Rollstuhl verwendet, werden nicht alle Wölbungen 4 durch das Gewicht eines sich auf das Kissen setzenden Nutzers gleichstark belastet. Das Fluid kann dann durch die Fluidverbindungen 10 aus den stärker belasteten Wölbungen 4 in weniger stark belastete Wölbungen verschoben werden.

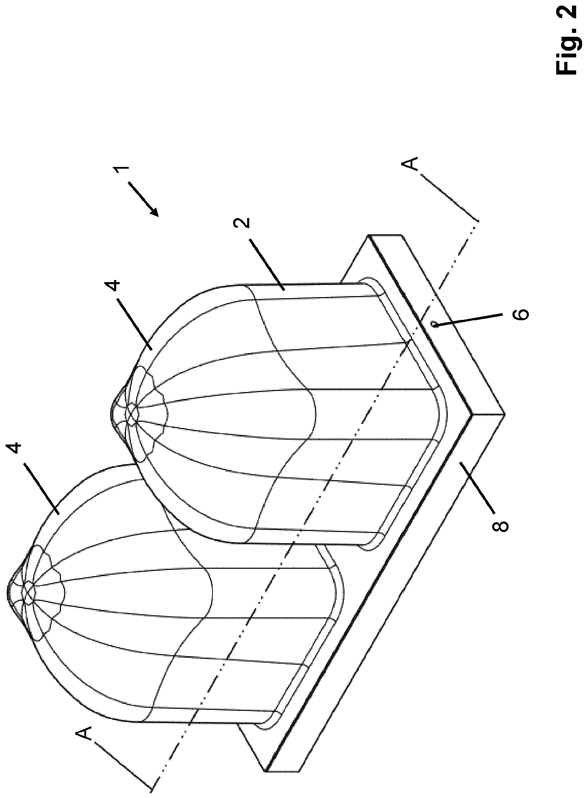

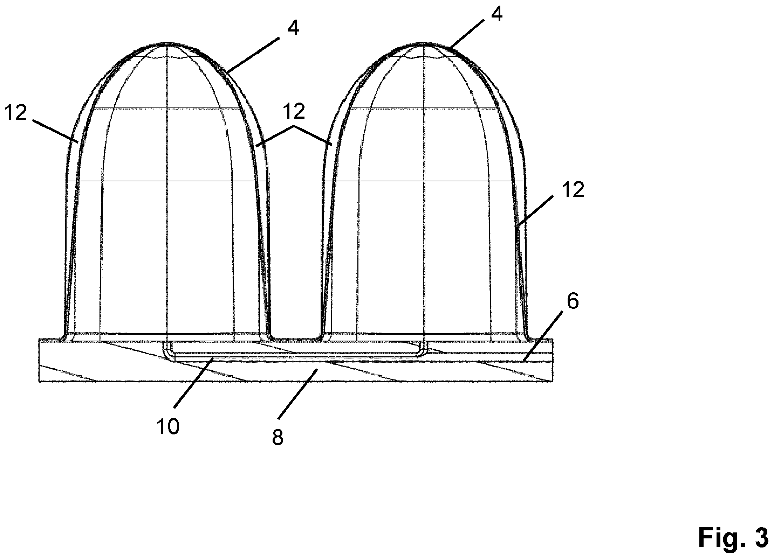

Figur 2 zeigt eine andere Ausgestaltung eines Kissens 1 mit einem ersten Kissenteil 2, das über zwei Wölbungen 4 verfügt, und an der Unterseite mit einem zweiten Kissenteil 8 verschlossen ist. Die Zuleitung 6 ist in diesem Fall im zweiten Kissenteil 8 integriert, wie insbesondere der Figur 3 zu entnehmen ist, die eine Schnittdarstellung durch das Kissen 1 aus Figur 2 dargestellt.

Figur 3 zeigt die beiden Wölbungen 4, die auf ihrer Unterseite durch das zweite Kissenteil 8 verschlossen sind. In dem zweiten Kissenteil 8 integriert befindet sich einerseits die Zuleitung 6 und andererseits eine Fluidverbindung 10, die die beiden Wölbungen 4 und das darunter eingeschlossene Volumen miteinander verbindet. Beide gemeinsam bilden folglich das fluidgefüllte Volumen, dessen Fluidfüllung über die Zuleitung 6 beeinflusst werden kann.

Man erkennt in Figur 3 zudem, dass eine Wandstärke einer Wand 12 der Wölbungen 4 nicht konstant ist, sondern etwa im Bereich der halben Höhe der Wölbung 4 eine besonders starke Wandstärke aufweist. Diese Änderungen in der Wandstärke, die mit herkömmlichen Verfahren aus dem Stand der Technik nicht oder nicht in der gewünschten Präzision erreichbar ist, kann durch geschickte Wahl der Innenform und der Außenform der beim Formpressverfahren verwendeten Form erreicht werden.

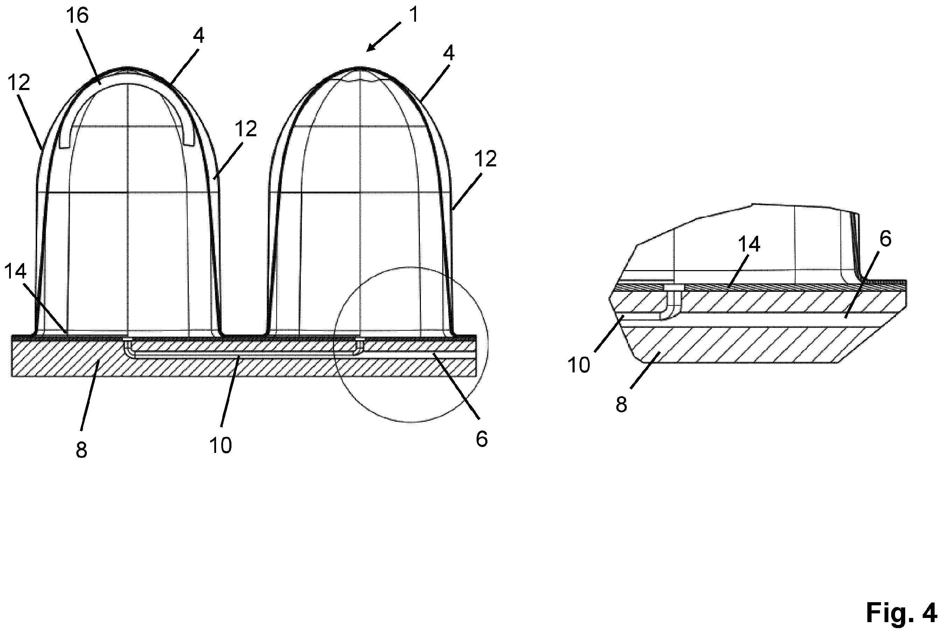

Figur 4 zeigt eine Schnittdarstellung durch eine weitere Ausgestaltung eines Kissens 1. Dabei ist im rechten Teil der Figur 4 ein vergrößerter Ausschnitt des rechten Teils der Figur 4 dargestellt.

Auch in Figur 4 verfügt das Kissen 1 über zwei Wölbungen 4, deren Wand 12 eine variierende Wandstärke aufweist. Das erste Kissenteil 2, das die beiden Wölbungen 4 aufweist, ist an der Unterseite durch das zweite Kissenteil 8 verschlossen. In ihm befindet sich wieder die Zuleitung 6 sowie die Fluidverbindung 10, die die beiden unterhalb der beiden Wölbungen eingeschlossenen Volumina miteinander fluidtechnisch verbindet. Zusätzlich verfügt das zweite Kissenteil 8 nun an seiner Oberseite über eine Beschichtung 14, die beispielsweise bereits beim Formpressverfahren hergestellt werden kann. Bei der Beschichtung 14 handelt es sich beispielsweise um eine Folie oder ein Netz, das in die Innenform und/oder die Au-βenform der beim Formpressverfahren verwendeten Form eingelegt wird und auf diese Weise stoffschlüssig mit dem zweiten Material des zweiten Kissenteil 8 verbunden wird.

In der linken Darstellung der Figur 4 ist zudem zu erkennen, dass innerhalb der links dargestellten Wölbung 4 ein Verstärkungselement 16 vorhanden ist, das ebenfalls bereits während des Formpressverfahrens an dem ersten Material der Wölbung 4 befestigt wurde. Im gezeigten Ausführungsbeispiel handelt es sich um ein Verstärkungselement, durch das die mechanische Belastbarkeit erhöht wird. Alternative Ausgestaltungen können beispielsweise Sensoren, Ventile, Zu- oder Ableitungen sowie andere Funktionselemente sein.

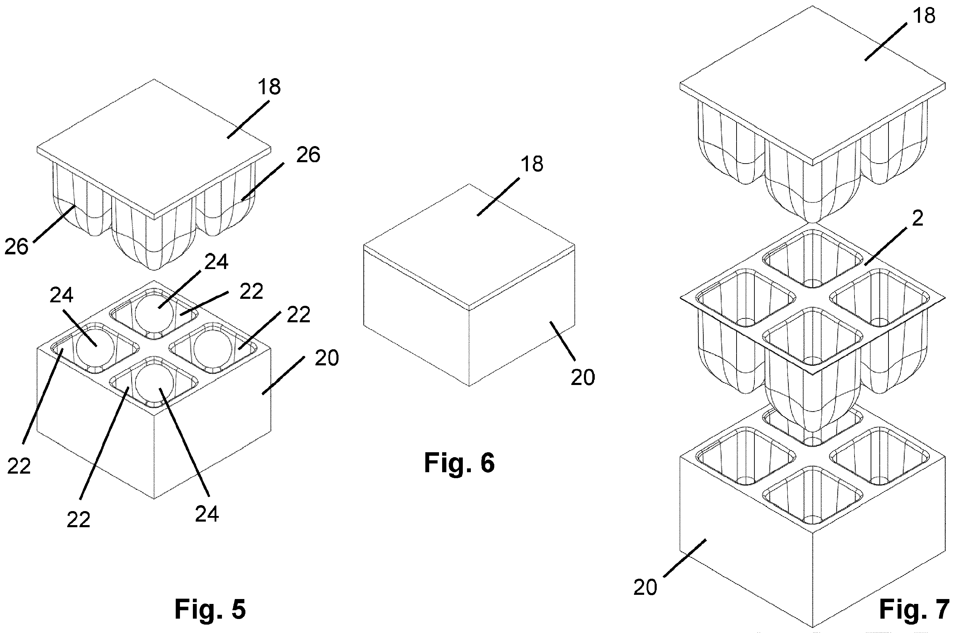

Figur 5 zeigt einen ersten Verfahrensschritt beim Formpressen. Man erkennt eine Innenform 18 und eine Außenform 20. Die Außenform 20 verfügt über vier Vertiefungen 22, in denen sich jeweils Rohmaterial 24 befindet, das gepresst werden soll. Die Innenform 18 verfügt über vier Vorsprünge 26, die zu den Vertiefungen 22 korrespondierend ausgebildet sind und in die Vertiefungen 22 eindringen, wenn die Innenform 18 in die Außenform 20 eingeführt wird.

Diese Situation ist in Figur 6 dargestellt. Man erkennt die Innenform 18, die vollständig in der Außenform 20 enthalten ist.

Figur 7 zeigt die Situation nachdem die Innenform 18 der Außenform 20 entfernt wurde. Das erste Kissenteil 2 ist beim Formpressen zwischen der Innenform 18 und der Außenform 20 hergestellt worden.

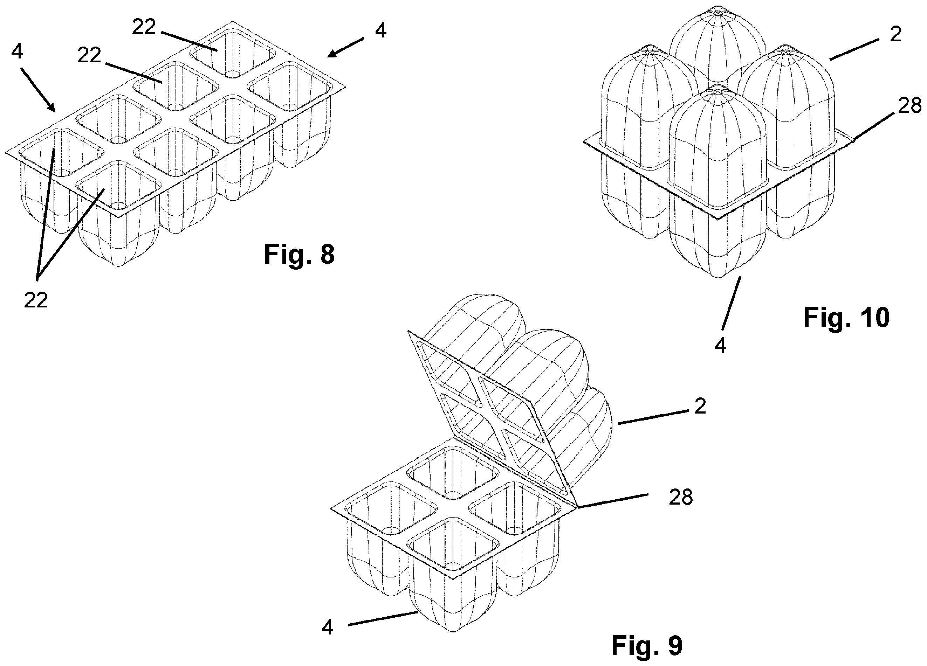

Figur 8 zeigt ein Bauteil, bei dem das erste Kissenteil 2 und das zweite Kissenteil 8 einstückig miteinander ausgebildet sind. Beide Kissenteile sind während des Formpressen gestellt worden. Das gezeigte Bauteil verfügt über zwei Reihen von jeweils vier Vertiefungen 22, denen jeweils die linken zwei Vertiefungen 22 zum zweiten Kissenteil 8 und die jeweils rechten zwei Vertiefungen 22 zum ersten Kissenteil 2 gehören.

In Figur 9 ist dargestellt, dass zwischen dem ersten Kissenteil 2 und dem zweiten Kissenteil 4 ein Filmscharnier 28 angeordnet ist, sodass das erste Kissenteil 2 und das zweite Kissenteil 4 relativ zueinander verschwenkt werden können.

In Figur 10 ist das erste Kissenteil 2 relativ zu dem zweiten Kissenteil 4 so weit verschwenkt worden, dass die beiden Kissenteile aufeinander aufliegen und miteinander verbunden werden können. Auf diese Weise entsteht das fluidgefüllte Volumen.

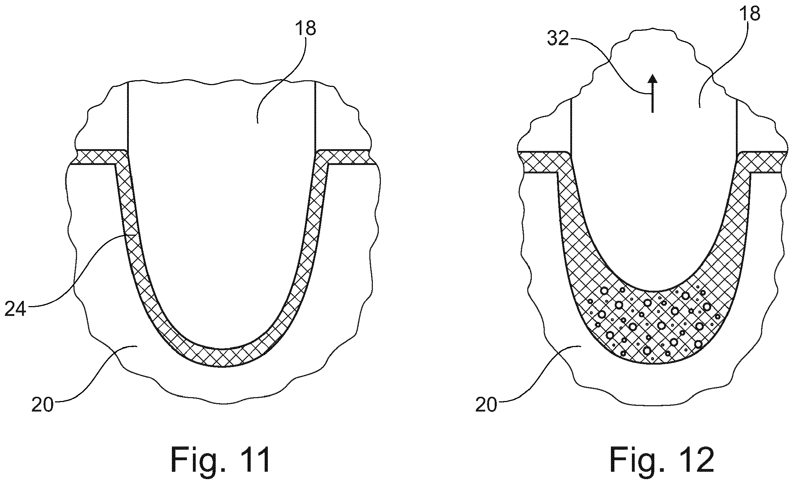

Figur 11 und 12 zeigen zwei verschiedene Stadien beim Formpressverfahren in einer Schnittdarstellung. Man erkennt in beiden Figuren die Innenform 18, die in den gezeigten Darstellungen von oben in die Außenform 20 eingeführt wurde. Dazwischen befindet sich in Figur 11 das Rohmaterial 24. Die Form ist geschlossen, es herrscht also die in Figur 6 gezeigte Situation vor.

Das Rohmaterial 24 ist in den gezeigten Darstellungen ein aufschäumendes Material, so dass sich das Volumen, dass das Material des herzustellenden ersten Kissenteiles 2 im Vergleich zu dem Volumen des Rohmaterial einnimmt, deutlich vergrößert. Um das Aufschäumen während des Formpressverfahrens kontrolliert und reproduzierbar ablaufen zu lassen, werden die Innenform 18 und die Außenform 20 in die in Figur 11 gezeigte Position gebracht, in der sich kein und nur sehr wenig freies Volumen in der Form befindet. In Figur 12 ist gezeigt, dass die Innenform 18 entlang des Pfeils 32 bewegt wird, während das Rohmaterial 24 zu dem fertigen Material des ersten Kissenteils 2 aufschäumt. Dadurch kann die Geschwindigkeit der Volumenvergrößerung, der herrschende Druck und das Endvolumen eingestellt werden.

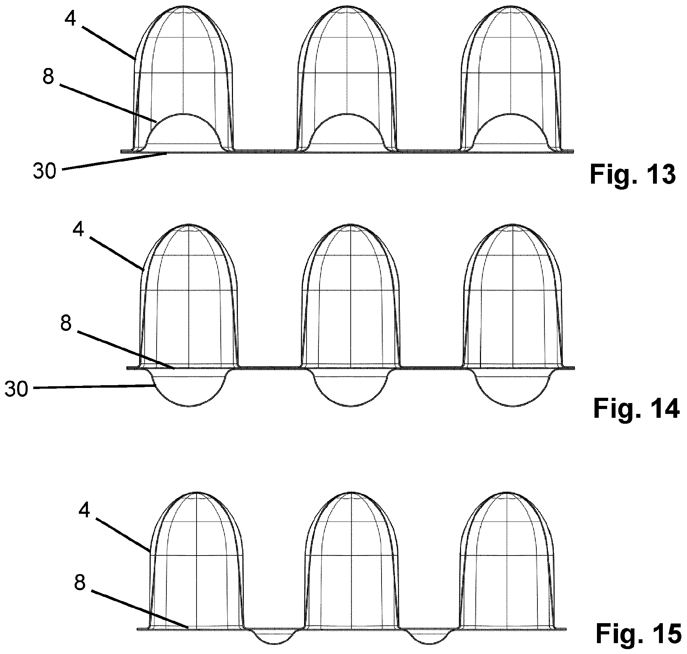

Die Figuren 13 und 14 zeigen Schnittdarstellungen durch ein Kissen, das aus drei Kissenteilen aufgebaut ist. Das erste Kissenteil 2 zeigt die bereits beschriebenen Wölbungen 4, die auf der Unterseite durch das zweite Kissenteil 8 begrenzt werden. In Figur 13 ist dieses zweite Kissenteil 8 ebenfalls gewölbt ausgebildet und ragt in die Wölbungen 4 des ersten Kissenteiles 2 hinein. In Figur 13 und 14 ist jeweils unterhalb des zweiten Kissenteils 8 ein drittes Kissenteil 30 angeordnet. Dadurch entsteht neben der Kammer zwischen dem ersten Kissenteil 2 und dem zweiten Kissenteil 8 eine weitere Kammer zwischen dem zweiten Kissenteil 8 und dem dritten Kissenteil 30. Beide Kammern sind in Figur 13 in der Wölbung 4 angeordnet. Diese Ausgestaltung ist insbesondere von Vorteil. Wenn das erste Kissenteil 2 beschädigt wird und nicht mehr fluiddicht für das enthaltene Fluid ist. In diesem Fall können die Kammern zwischen dem zweiten Kissenteil 8 und dem dritten Kissenteil 30 die Funktion zumindest abgeschwächt oder teilweise übernehmen.

Vorzugsweise sind die Kammern zwischen dem ersten Kissenteil 2 und dem zweiten Kissenteil 8 miteinander fluidtechnisch verbunden und bilden ein Teilvolumen. Auch die Kammern zwischen dem zweiten Kissenteil 8 und dem dritten Kissenteil 30 sind fluidtechnisch verbunden und bilden ein weiteres Teilvolumen. Bevorzugt besteht zwischen den beiden so gebildeten Teilvolumina jedoch keine Fluidverbindung.

In Figur 14 ist eine ausführungsform eines Kissens in einer Schnittdarstellung gezeigt, die sich von der in Figur 13 gezeigten Ausführungsform lediglich dadurch unterscheidet, dass die Kammern zwischen dem zweiten Kissenteil 8 und dem dritten Kissenteil 30 nicht innerhalb der Wölbung 4, sondern darunter angeordnet sind.

Figur 15 zeigt eine Ausgestaltung, die kein drittes Kissenteil aufweist. Zwischen den einzelnen Wölbungen 4 des ersten Kissenteiles 2 befinden sich weitere Kammern, die zwischen dem ersten Kissenteil 2 und dem zweiten Kissenteil 8 gebildet werden. Sie können untereinander und/oder mit den Kammern unterhalb der Wölbungen 4 verbunden sein.

### Bezugszeichenliste:

- 1: Kissen
- 2: erstes Kissenteil
- 4: Wölbung
- 6: Zuleitung
- 8: zweites Kissenteil
- 10: Fluidverbindung
- 12: Wand
- 14: Beschichtung
- 16: Verstärkungselement
- 18: Innenform
- 20: Außenform
- 22: Vertiefung
- 24: Rohmaterial
- 26: Vorsprung
- 28: Filmscharnier
- 30: drittes Kissenteil
- 32: Pfeil

## Patentansprüche

1. Verfahren zum Herstellen eines Kissens (1) für eine orthopädietechnische Einrichtung, wobei das Kissen (1) wenigstens ein fluidgefülltes Volumen aufweist, wobei das Verfahren folgende Schritte aufweist:
a) Formpressen eines 3-dimensionalen ersten Kissenteiles (2) aus wenigstens einem ersten Material, das vorzugsweise elastisch ist, in einer Form,die eine Innenform (18) und eine Außenform (20) aufweist,
b) Verbinden des ersten Kissenteiles (2) mit wenigstens einem zweiten Kissenteil (8) derart, dass das fluidgefüllte Volumen entsteht,
wobei der Verfahrensschritt a) folgende Schritte aufweist:
a1) Einfüllen von Rohmaterial (24) in die Form,
a2) Pressen des Rohmaterials (24) zwischen Innenform (18) und Au-βenform (20),
a3) Vulkanisieren des Rohmaterials (24) zwischen Innenform (18) und Außenform (20), so dass das erste Kissenteil (2) entsteht,
**dadurch gekennzeichnet, dass** das erste Kissenteil (2) und/oder das wenigstens eine zweite Kissenteil (8) über Bereiche unterschiedlicher Wandstärken und/oder über eine Oberfläche mit Bereichen unterschiedlicher Struktur und/oder Rauigkeit aufweist und dass das fluidgefüllte Volumen mehrere Kammern aufweist, die durch Fluidverbindungen (10) miteinander verbunden sind.

2. Verfahren nach Anspruch 1, **dadurch gekennzeichnet, dass** das erste Kissenteil (2) und das zweite Kissenteil (8) einstückig miteinander ausgebildet sind und beim Formpressen im Verfahrensschritt a) hergestellt werden.

3. Verfahren nach Anspruch 1, **dadurch gekennzeichnet, dass** das zweite Kissenteil (8) ein von dem ersten Kissenteil (2) separates Bauteil ist.

4. Verfahren nach einem der vorstehenden Ansprüche, **dadurch gekennzeichnet, dass** das erste Kissenteil (2) und/oder das zweite Kissenteil (8) aus mehreren unterschiedlichen Materialien hergestellt werden, die sich vorzugsweise beim Herstellen des jeweiligen Kissenteils (2, 8) stoffschlüssig miteinander verbinden, besonders bevorzugt gemeinsam vulkanisieren.

5. Verfahren nach einem der vorstehenden Ansprüche, **dadurch gekennzeichnet, dass** die Innenform (18) und/oder die Außenform (20) mit einer Beschichtung (14) versehen ist, die beim Formpressen auf das erste Kissenteil (2) übertragen wird, wobei die Beschichtung (14) vorzugsweise in die Form eingelegt und/oder auf die Innenform (18) und/oder die Außenform (20) aufgebracht ist.

6. Verfahren nach einem der vorstehenden Ansprüche, **dadurch gekennzeichnet, dass** das wenigstens eine erste Material ein aufschäumendes Material ist.

7. Verfahren nach einem der vorstehenden Ansprüche, **dadurch gekennzeichnet, dass** beim Formpressen des ersten Kissenteil (2) wenigstens ein Sensor und/oder wenigstens ein Aktuator und/oder wenigstens ein Funktionselement in das erste Kissenteil (2) eingebracht und/oder an das erste Kissenteil (2) angebracht wird.

8. Verfahren nach einem der vorstehenden Ansprüche, **dadurch gekennzeichnet, dass** beim Formpressen ein Element aus einem elektrisch leitfähigen Material in das wenigstens eine erste elastische Material eingebracht wird oder das wenigstens eine erste elastische Material elektrisch leitfähig ist.

9. Kissen (1) für eine orthopädietechnische Einrichtung, hergestellt nach einem Verfahren gemäß einem der vorstehenden Ansprüche.

## Claims

1. A method for producing a cushion (1) for an orthopedic device, the cushion
(1) having at least one fluid-filled volume, wherein the method comprises the following steps:
a) Compression molding of a three-dimensional first cushion component
(2) made of at least a first material, which is preferably elastic, in a mold that comprises an inner mold (18) and outer mold (20),
b) Bonding the first cushion component (2) to at least a second cushion component (8) in such a way that the fluid-filled volume is created, wherein step a) in the method comprises the following steps:
a1) Filling the mold with raw material (24),
a2) Pressing the raw material (24) between the inner mold (18) and outer mold (20),
a3) Vulcanizing of the raw material (24) between inner mold (18) and outer
mold (20), thereby creating the first cushion component (2), **characterized in that** the first cushion component (2) and/or the at least one second cushion component (8) has areas of different wall thicknesses and/or a surface with areas of different structure and/or roughness and that the fluid-filled volume comprises multiple chambers that are connected to each other via fluid connections (10).

2. The method according to claim 1, **characterized in that** the first cushion component (2) and the second cushion component (8) are designed as a single piece and produced during compression molding in step a) of the method.

3. The method according to claim 1, **characterized in that** the second cushion component (8) is a separate component to the first cushion component (2).

4. The method according to one of the preceding claims, **characterized in that** the first cushion component (2) and/or the second cushion component (8) are made of several different materials that preferably integrally bond, especially preferably vulcanize, to one another during production of the respective cushion component (2, 8).

5. The method according to one of the preceding claims, **characterized in that** the inner mold (18) and/or the outer mold (20) is provided with a coating (14) which is transferred to the first component (2) during compression molding, the coating (14) preferably being inserted into the mold and/or applied to the inner mold (18) and/or the outer mold (20).

6. The method according to one of the preceding claims, **characterized in that** the at least one first material is a foaming material.

7. The method according to one of the preceding claims, **characterized in that** at least one sensor and/or at least one actuator and/or at least one functional element is introduced into the first cushion component (2) and/or arranged on the first cushion component (2) during compression molding of the first cushion component (2).

8. The method according to one of the preceding claims, **characterized in that** during compression molding an element of an electrically conductive material is introduced into the at least one first elastic material or the at least one first elastic material is electrically conductive.

9. A cushion (1) for an orthopedic device that is produced by a method according to one of the preceding claims.

## Revendications

1. Procédé de fabrication d'un coussin (1) pour un dispositif orthopédique, le coussin (1) présentant au moins un volume rempli de fluide, le procédé comprenant les étapes suivantes consistant à :
a) mouler par compression une première partie de coussin (2) tridimensionnelle en au moins un premier matériau, de préférence élastique, dans un moule qui comprend un moule interne (18) et un moule externe (20), b) relier la première partie de coussin (2) à au moins une deuxième partie de coussin (8), de manière à obtenir le volume rempli de fluide,
l'étape a) du procédé comprenant les étapes suivantes consistant à :
a1) introduire du matériau brut (24) dans le moule,
a2) presser le matériau brut (24) entre le moule interne (18) et le moule externe (20),
a3) vulcaniser le matériau brut (24) entre le moule interne (18) et le moule externe (20), de manière à obtenir la première partie de coussin (2),
**caractérisé en ce que**
la première partie de coussin (2) et/ou ladite au moins une deuxième partie de coussin (8) présente(nt) des zones d'épaisseurs de paroi différentes et/ou une surface avec des zones de structure et/ou de rugosité différente, et
**en ce que** le volume rempli de fluide présente plusieurs chambres reliées entre elles par des communications fluidiques (10).

2. Procédé selon la revendication 1,
**caractérisé en ce que** la première partie de coussin (2) et la deuxième partie de coussin (8) sont réalisées d'une seule pièce l'une avec l'autre et sont fabriquées lors du moulage par compression dans l'étape a) du procédé.

3. Procédé selon la revendication 1,
**caractérisé en ce que** la deuxième partie de coussin (8) est un composant séparé de la première partie de coussin (2).

4. Procédé selon l'une des revendications précédentes,
**caractérisé en ce que** la première partie de coussin (2) et/ou la deuxième partie de coussin (8) sont fabriquées en plusieurs matériaux différents qui, de préférence, se lient entre eux par liaison de matière lors de la fabrication de la partie de coussin respective (2, 8), et qui, de manière particulièrement préférée, se vulcanisent ensemble.

5. Procédé selon l'une des revendications précédentes,
**caractérisé en ce que** le moule interne (18) et/ou le moule externe (20) est pourvu d'un revêtement (14) qui est transféré sur la première partie de coussin (2) lors du moulage par compression, le revêtement (14) étant de préférence inséré dans le moule et/ou appliqué sur le moule interne (18) et/ou sur le moule externe (20).

6. Procédé selon l'une des revendications précédentes,
**caractérisé en ce que** ledit au moins un premier matériau est un matériau moussant.

7. Procédé selon l'une des revendications précédentes,
**caractérisé en ce que**, lors du moulage par compression de la première partie de coussin (2), au moins un capteur et/ou au moins un actionneur et/ou au moins un élément fonctionnel est inséré dans la première partie de coussin (2) et/ou est appliqué à la première partie de coussin (2).

8. Procédé selon l'une des revendications précédentes,
**caractérisé en ce que**, lors du moulage par compression, un élément en un matériau électriquement conducteur est inséré dans ledit au moins un premier matériau élastique, ou ledit au moins un premier matériau élastique est électriquement conducteur.

9. Coussin (1) pour un dispositif orthopédique, fabriqué par un procédé selon l'une des revendications précédentes.
